# EUROPÄISCHE PATENTSCHRIFT

(11) **EP 3 687 155 B1**
(45) Veröffentlichungstag und Bekanntmachung des Hinweises auf die Patenterteilung: **06.10.2021**
(21) Anmeldenummer: 20150518.7
(22) Anmeldetag: 07.01.2020
(51) Int. Cl.: H04N 5/225, H04N 5/232, G03B 5/00, G03B 17/02, G03B 37/04, H04N 5/247, G02B 3/14, G02B 3/12, G03B 3/10

(54) **MODULARE KAMERAVORRICHTUNG UND VERFAHREN ZUR OPTISCHEN ERFASSUNG**
MODULAR CAMERA DEVICE AND METHOD FOR OPTICAL DETECTION
DISPOSITIF MODULAIRE DE CAMÉRA ET PROCÉDÉ DE DÉTECTION OPTIQUE

(30) Priorität: 22.01.2019 DE 102019101490
(43) Veröffentlichungstag der Anmeldung: 29.07.2020
(73) Patentinhaber: SICK AG, 79183 Waldkirch (DE)
(72) Erfinder: Schneider, Florian, 79276 Reute (DE); Müller, Romain, 79252 Stegen (DE)

(56) Entgegenhaltungen:
- EP-A1- 3 388 860
- WO-A1-2012/047216
- DE-A1-102015 215 833
- US-B1- 9 497 380

## Beschreibung

Die Erfindung betrifft eine modulare Kameravorrichtung und ein Verfahren zur optischen Erfassung eines Überwachungsbereichs nach dem Oberbegriff von Anspruch 1 beziehungsweise 10.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Die jeweiligen Anwendungen unterscheiden sich in ihren Anforderungen, beispielsweise in Bezug auf die geforderten Auflösungen, Arbeitsabstände, Aufnahmefrequenzen und dergleichen. Bisher werden dafür verschiedene Gerätevarianten angeboten, die sich voneinander deutlich unterscheiden und in einem separaten Produktentwicklungsprozess entstehen. Auf der Softwareseite ist dabei ein Plattformansatz möglich, aber für die Hardware gibt es kaum Synergien, was zu langen Entwicklungszeiten und einem hohen Ressourcenaufwand führt. Das liegt daran, dass für die jeweilige Hardwareanpassung eine Vielzahl von Schritten erforderlich ist: einen geeigneten Bildsensor auswählen und implementieren, ein geeignetes Objektiv finden oder im Eigendesign herstellen, vergleichbare Schritte für Lichtquelle und Optik der Beleuchtung, Entwicklung der zugehörigen Elektronik und Umsetzung auf einer Leiterplatte, das Temperaturmanagement optimieren, und schließlich auch ein Gehäuse designen und herstellen.

Es ist bekannt, mehrere Kameras zu einem Kameraarray zu verbinden. Ein Beispiel dafür ist die US 2011/0109748 A1. Dadurch entsteht aber noch kein industrietauglicher Sensor.

Die EP 2 546 776 B1 offenbart einen kamerabasierten Codeleser, der aus mehreren nebeneinander angeordneten Kamerazeilen besteht. Zeilenkameras lassen aber noch zu wenig Freiheitsgrade für ein modulares Konzept.

In der DE 10 2017/107 903 A1 wird eine 3D-Lichtlaufzeitkamera mit mehreren Lichtlaufzeitmodulen und einer zentralen Steuer- und Auswertungseinheit vorgestellt. Das verwendete phasenbasierte Lichtlaufzeitverfahren stellt jedoch ganz besondere Anforderungen, so dass sich das nicht einfach verallgemeinern lässt.

Allgemein ist bekannt, zur Erweiterung des Erfassungsbereichs mehrere Module in einem Strangpressprofil als Gehäuse unterzubringen, etwa für Lichtgitter oder auch aus der US 9 940 494 B2 für RFID-Leser. Die eigentlichen Sensoraufgaben betrifft das nicht, erst recht nicht für den Fall einer Kamera.

DE 10 2014 114 506 A1 offenbart eine Kamera zur Inspektion oder Identifikation, die auch ein dreidimensionales Bild der Objektgeometrien erzeugt. Ein modularer Ansatz oder eine besonders flexible Anpassung an unterschiedliche Anwendungsbedingungen ist daraus aber nicht bekannt.

Die US 9 497 380 B1 offenbart eine Bildaufnahmevorrichtung mit einer Vielzahl von Bildaufnahmeelementen, die mechanisch und elektronisch zu einem Array in verschiedenen Konfigurationen verbunden werden.

Aus der DE 10 2015 215 833 A1 ist eine Multiaperturabbildungsvorrichtung mit einem einzeiligen Array von optischen Kanälen und einer Strahlumlenkvorrichtung aus mehreren Facetten je Kanal bekannt.

In der WO 2012/047216 A1 wird ein Kameraarray in verschiedenen Matrix- und Zeilenanordnungen vorgestellt.

Es ist daher Aufgabe der Erfindung, eine flexiblere Kameravorrichtung anzugeben.

Diese Aufgabe wird durch eine modulare Kameravorrichtung und ein Verfahren zur optischen Erfassung eines Überwachungsbereichs nach Anspruch 1 beziehungsweise 10 gelöst. Die Kameravorrichtung umfasst mehrere Kameramodule mit jeweils einem Bildsensor und einer Empfangsoptik. Der Modulsichtbereich eines jeden Kameramoduls wird durch das Sichtfeld der Empfangsoptik und des Bildsensors bestimmt. Die Modulsichtbereiche ergänzen einander zu dem Überwachungsbereich der Kameravorrichtung.

Die Erfindung geht von dem Grundgedanken aus, den Überwachungsbereich anpassbar zu machen. Dazu werden die einzelnen Modulsichtbereiche gemeinsam beziehungsweise koordiniert eingestellt. Dadurch wird insbesondere das Sichtfeld insgesamt durch mehr oder weniger gegenseitigen Modulsichtbereich vergrößert oder verkleinert. Der Überlapp wiederum lässt sich für verschiedene Zwecke nutzen, beispielsweise eine höhere Auflösung, eine schnellere Aufnahmefrequenz oder einen erweiterten Tiefenschärfenbereich. Die Anpassung der Modulsichtbereiche kann einmalig in Sinne von einer geeigneten Wahl beim Aufbau der Kameravorrichtung aus Kameramodulen oder bei der Einrichtung der Kameravorrichtung am Ort der Anwendung, aber auch dynamisch im Sinne einer Reaktion mit einer Aktorik auf die aktuelle Erfassungssituation verstanden werden.

Die Erfindung hat den Vorteil, dass eine skalierbare Kameraplattform entsteht. Es können vergleichsweise einfache Kameravorrichtungen für unterschiedlichste Anwendungsanforderungen aufgebaut werden. Dadurch kann erheblicher Entwicklungsaufwand für Gerätevarianten eingespart werden, und zudem reduzieren sich die Herstellungskosten.

Das Kameramodul weist bevorzugt eine Kippeinheit zum Verändern der Blickrichtung auf. Damit sind die Kameramodule in ihrer Blickrichtung individuell ausrichtbar. Die Steuer- und Auswertungseinheit sorgt für ein koordiniertes Einstellen der Kipprichtung.

Dadurch ergänzen die Modulsichtbereiche einander zum jeweils gewünschten Überwachungsbereich einschließlich Überlappungsbereichen.

Die Kippeinheit weist bevorzugt eine Flüssiglinse oder eine Tauchspuleinheit auf. Mit einer kippbaren Flüssiglinse oder einer Tauchspuleneinheit (Voice-Coil-Aktuator) mit genügend Freiheitsgraden entsteht eine kompakte Empfangsoptik zum Verstellen von Modulsichtbereichen.

Die Bildsensoren der Kameramodule sind vorzugsweise in einer gemeinsamen Ebene angeordnet. Die Ausrichtung der einzelnen Modulsichtbereiche wäre prinzipiell auch dadurch möglich, die Bildsensoren auf einer geeignet gekrümmten Fläche anzuordnen. Herstellung und Aufbau der Kameravorrichtung vereinfachen sich aber erheblich bei ebener Anordnung. Die Modulsichtbereiche lassen sich dann durch Verkippung anpassen.

Das Kameramodul weist bevorzugt eine Fokusverstelleinheit auf. Der Überwachungsbereich bestimmt sich nicht nur lateral durch den Bereich, aus dem überhaupt Licht empfangen wird, sondern auch durch den Tiefenschärfenbereich. Denn aus einem unscharfen Bild lässt sich die gewünschte Information nicht ableiten, etwa kein Code lesen. Deshalb kann auch eine Fokusverstellung als Anpassung des Modulsichtbereichs aufgefasst werden. Die Steuer- und Auswertungseinheit sorgt wiederum für ein koordiniertes, gemeinsames Einstellen der Fokuslagen. Die Fokusverstelleinheit kann gemeinsam mit der Kippeinheit ausgebildet sein, also beide Funktionen erfüllen. Insbesondere sind dazu die schon für die Kippeinheit genannten Beispiele Flüssiglinse oder Tauchspuleinheit geeignet.

Die Steuer- und Auswertungseinheit ist dafür ausgebildet, die Modulsichtbereiche und insbesondere deren Überlappung in Abhängigkeit von einer Fokuslage einzustellen. Das Ziel kann sein, dass im durch die Fokuslage eingestellten Tiefenschärfenbereich keine Lücken entstehen. Dazu kann bei einer näheren Fokuslage eine stärkere Verkippung aufeinander zu erforderlich sein, damit bereits im der Fokuslage entsprechenden Abstand ein gewisser Überlapp oder zumindest ein lückenloses Angrenzen der Modulsichtbereiche erzielt wird. Bei einer fernen Fokuslage dagegen darf es für kürzere Abstände durchaus noch Lücken zwischen den Modulsichtbereichen geben, da hier ohnehin keine scharfen Bilder aufgenommen würden. Dadurch genügt eine geringere Verkippung aufeinander zu, möglicherweise ist sogar eine Verkippung voneinander weg denkbar, um einen noch größeren Überwachungsbereich abzudecken.

Die Steuer- und Auswertungseinheit ist bevorzugt dafür ausgebildet, die Modulsichtbereiche in Abhängigkeit von einer Geometrie eines zu erfassenden Objekts einzustellen. Mit Objektgeometrie ist vorzugsweise eine Abstandskontur gemeint, also der jeweilige Objektabstand zu der Kameravorrichtung über das Objekt hinweg. Die Objektgeometrie wird vorzugsweise vermessen, kann aber auch auf Vorgaben oder Annahmen basieren. Die Modulsichtbereiche werden dann entsprechend ausgerichtet, um die Objektgeometrie möglichst vollständig und genau zu erfassen. Dabei wird vorzugsweise auch die Fokuslage mit eingestellt. Dabei sind unterschiedliche Fokuslagen je Kameramodul denkbar, wenn die Objektgeometrie zu unterschiedlichen Abständen in den jeweiligen Modulsichtbereichen führt.

Die Steuer- und Auswertungseinheit ist bevorzugt dafür ausgebildet, mit Hilfe der Kameramodule dreidimensionale Bilddaten zu erfassen und daraus einen Arbeitsabstand abzuleiten, für den die Modulsichtbereiche eingestellt werden. Eine 3D-Erfassung ist beispielsweise möglich, indem die Bilddaten von mindestens zwei Kameramodulen mit überlappendem Modulsichtbereich mit einem Stereoskopieverfahren ausgewertet werden. Eine andere Ausführungsform verwendet spezielle 3D-Kameramodule, in denen beispielsweise ein Lichtlaufzeitverfahren implementiert ist. Sollen die dreidimensionalen Bilddaten zum Einstellen der Modulsichtbereiche verwendet werden, so ist eine schnelle Bildaufnahme relativ zur Dynamik der Szenerie vorteilhaft, damit die Einstellungen rechtzeitig vorgenommen sind, um damit die gewünschten Bildinformationen noch zu erfassen.

Die Kameramodule bilden bevorzugt mindestens eine lineare Anordnung, die in Reihenschaltung mit der Steuer- und Auswertungseinheit verbunden ist. Eine derartige lineare Anordnung ermöglicht einen besonders einfachen Aufbau. Die Signale zur Ansteuerung beziehungsweise umgekehrt die Bild- oder sonstigen Ausgabedaten werden vorzugsweise von den Kameramodulen durchgeschleust, und nur mindestens ein Ende der Reihenschaltung ist mit der Steuer- und Auswertungseinheit verbunden.

Die Kameravorrichtung weist bevorzugt mindestens ein Beleuchtungsmodul auf. Damit wird der Überwachungsbereich ausgeleuchtet. Prinzipiell ist auch für die Beleuchtungsmodule eine koordinierte Ansteuerung zum Bilden eines gemeinsamen Beleuchtungsbereichs aus Modulbeleuchtungsbereichen analog zu den Kameramodulen denkbar. Ebenso können die Beleuchtungsmodule eine lineare Anordnung ähnlich der beschriebenen bevorzugten Ausführungsform für Kameramodule bilden. Beleuchtungsmodule zum Erzeugen eines strukturierten Beleuchtungsmusters sind denkbar, etwa für ein aktives Stereoskopieverfahren.

Die Kameravorrichtung weist bevorzugt mindestens ein Projektionsmodul auf. Damit wird ein Beleuchtungsmuster im Überwachungsbereich erzeugt, das anders als die Beleuchtung eines Beleuchtungsmoduls nicht die Erfassung von Bilddaten unterstützt, sondern dem Anwender eine Information gibt. Beispiele sind ein Ziellaser zum Markieren des Lesefeldes eines Codelesers oder eine Statusinformation, die beispielsweise eine erfolgreiche Erfassung rückmeldet.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1a: eine Schnittansicht eines Kameramoduls;
- Fig. 1b: eine dreidimensionale Ansicht eines Kameramoduls;
- Fig. 2a: eine Schnittansicht eines Beleuchtungsmoduls;
- Fig. 2b: eine dreidimensionale Ansicht eines Beleuchtungsmoduls;
- Fig. 3: eine Schnittansicht einer Kamera mit drei Kameramodulen;
- Fig. 4a: eine dreidimensionale Ansicht einer Kamera mit einem Kameramodul und zwei Beleuchtungsmodulen;
- Fig. 4b: eine dreidimensionale Ansicht einer Kamera mit sechs Kameramodulen und neun Beleuchtungsmodulen;
- Fig. 4c: eine dreidimensionale Ansicht einer Kamera mit zehn Kameramodulen und fünfzehn Beleuchtungsmodulen;
- Fig. 5: eine schematische Ansicht von drei Kameramodulen zur Erläuterung einer Anordnung auf einer gekrümmten Fläche;
- Fig. 6a: eine Schnittansicht eines Kameramoduls ohne Verkippung zum Vergleich;

- Fig. 6b: eine Schnittansicht eines Kameramoduls mit Verkippung durch Verschieben der lateralen relativen Lage von Empfangsoptik und Bildsensor;
- Fig. 6c: eine Schnittansicht eines Kameramoduls mit Verkippung durch ein zusätzliches optisches Element;
- Fig. 7a: eine Schnittansicht zweier Kameramodule, von denen eines zu Vergrößerung des Überlappungsbereichs verkippt ist;
- Fig. 7b: eine Vergleichsansicht zu Figur 7a ohne Verkippung zur Vergrößerung des Überwachungsbereichs;
- Fig. 8a: eine Schnittansicht von drei Kameramodulen mit durch Verkippung erzieltem großem gegenseitigem Überlapp für nähere Fokuslage;
- Fig. 8b: eine Schnittansicht ähnlich Figur 8a nun nur mit anderer Verkippung für wenig Überlapp bei ferner Fokuslage;
- Fig. 9a: eine Schnittansicht von drei Kameramodulen mit Einstellung von Verkippung und Fokuslage auf ein nahes Objekt; und
- Fig. 9b: eine Schnittansicht ähnlich Figur 9a nun nur mit Einstellung von Verkippung und Fokuslage auf ein fernes Objekt.

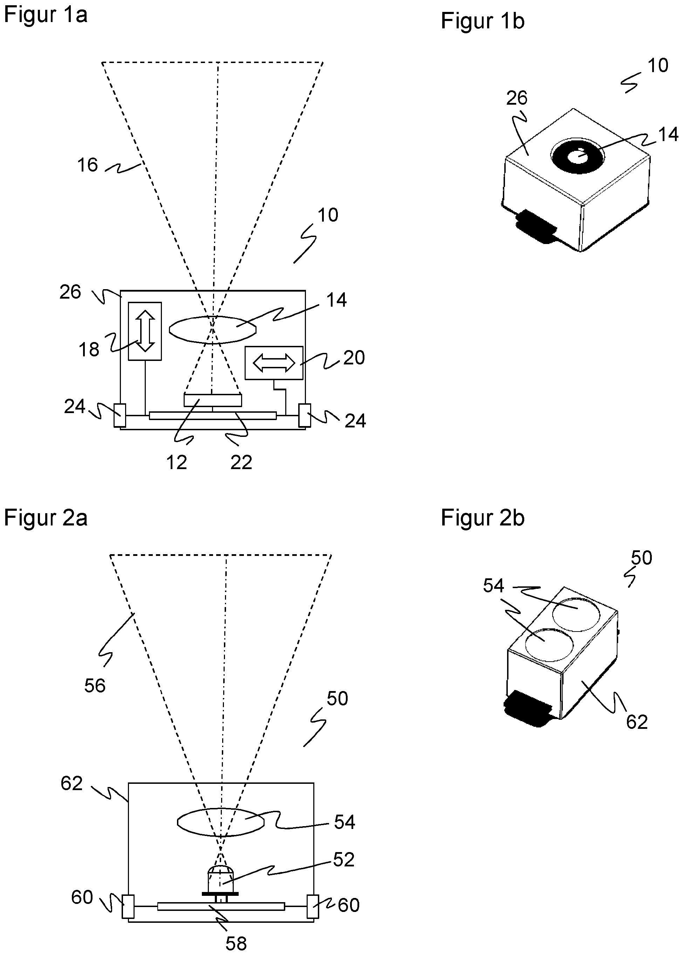

Figur 1a zeigt eine schematische Schnittansicht eines Kameramoduls 10. Figur 1b ist eine ergänzende beispielhafte 3D-Ansicht. Das Kameramodul 10 weist einen Bildsensor 12 und eine Empfangsoptik 14 auf, die hier vereinfachend durch eine einfache Linse repräsentiert ist. Der Bildsensor 12 ist vorzugsweise für eine ganze Familie von Kameras, in denen Kameramodule 10 eingesetzt werden, der gleiche oder weist zumindest für einfachste Austauschbarkeit die gleichen Anschlüsse (Pinning) auf. Dann sind auch Varianten wie monochrom, farbig, polarisiert und dergleichen möglich. Alternative können zu Standardbildsensoren auch Zeilenkameras oder Event-basierte Bildsensoren eingesetzt werden.

Die Eigenschaften von Bildsensor 12 und Empfangsoptik 14 sowie deren Anordnung bestimmen einen Modulsichtbereich 16 des Kameramoduls. Während Modulsichtbereich 16 allgemein den Bereich bezeichnet, aus dem der Bildsensor 12 Licht empfangen und detektieren kann, kommt als weitere Eigenschaft des Modulsichtbereichs 16 auch der Tiefenschärfenbereich hinzu. Denn mit unscharfen Bilddaten lassen sich die meisten geforderten Auswertungen nicht vornehmen.

Deshalb ist eine nur ganz schematisch gezeigte Fokusverstellung 18 vorgesehen, um den Tiefenschärfenbereich zu verändern. Die Fokusverstellung 18 kann je nach Ausgestaltung den Abstand zwischen Bildsensor 12 und Empfangsoptik 14 oder direkt die Brennweite der Empfangsoptik 14 verändern. Eine elektronische Fokusverstellung 18 ist zu bevorzugen, da eine händische Einstellung für eine Vielzahl von Kameramodulen 10 zu aufwändig wäre.

Eine Kippeinheit 20 dient dazu, den Modulsichtbereich 16 lateral zu verschieben. Die Empfangsoptik 14 muss dazu keineswegs physisch verkippt werden, vielmehr umfasst die Kippeinheit 20 vorzugsweise eine geeignete Aktorik beispielsweise in Form einer Tauchspuleinheit oder kippbaren Flüssiglinse. Die Fokusverstelleinheit 18 und die Kippeinheit 20 können auch gemeinsam ausgebildet sein. Prinzipiell kann zum Verkippen die Lage des Bildsensors 12 bezüglich der Empfangsoptik 14 verändert werden, aber dies ist in der Regel aus konstruktiven Gründen die umständlichere Lösung.

Mit dem Bildsensor 12 ist eine Vorverarbeitungseinheit 22 des Kameramoduls 10 verbunden. Dafür sind verschiedene Auswertungsbausteine vorstellbar, beispielsweise ein FPGA (Field Programmable Gate Array), ein spezielle Al-Chip oder ein Microcontroller. Die Vorverarbeitung betrifft Aufgaben wie Segmentierung oder Filterung, insbesondere eine Geokorrektur mit den intrinsischen Kameraparametern, die ein Zusammenfügen von Teilbildern einzelner Kameramodule 10 zu einem Gesamtbild vorbereitet oder allgemein eine Bildaufbereitung, die speziell bei codelesenden Systemen zu einem verbesserten Leseergebnis führt. Ein Al-Chip unterstützt Bildauswertungsverfahren mit neuronalen Netzen (CNN, Convolutional Neural Networks) und kann multidimensionale Matrixmultiplikationen nahezu in Echtzeit durchführen. Die Vorverarbeitungseinheit 22 kann abweichend von der Darstellung zumindest teilweise gemeinsam mit dem Bildsensor 12 auf einem Chip integriert sein.

Über elektronische Schnittstellen 24 kommuniziert das Kameramodul 10 mit anderen Kameramodulen oder übergeordneter Elektronik. Figur 1a zeigt beispielhaft Schnittstellen 24 zu beiden Seiten für eine bevorzugte Reihenanordnung mehrerer Kameramodule 10. Das Kameramodul 10 ist in einem Gehäuse 26 untergebracht.

Figur 2a zeigt eine schematische Schnittansicht und Figur 2b eine ergänzende beispielhafte 3D-Ansicht eines Beleuchtungsmoduls 50. Beleuchtungsmodule 50 können mit Kameramodulen 10 zu einer Kamera mit aktiver Beleuchtung kombiniert werden. Der Grundaufbau eines Beleuchtungsmoduls 50 ist demjenigen eines Kameramoduls 10 ähnlich. Es umfasst eine Lichtquelle 52, beispielsweise eine LED oder einen Laser, und eine Beleuchtungsoptik 54. Damit wird ein Modulbeleuchtungsbereich 56 erzeugt.

In der gezeigten Ausführungsform ist der Modulbeleuchtungsbereich 56 fix. Ein variabler Modulbeleuchtungsbereich 56 mit einer Aktorik entsprechend der Fokusverstellung 18 und/oder der Kippeinheit 20 wäre aber auch denkbar. Eine Fokussierung ist beispielsweise dann sinnvoll, wenn das Beleuchtungsmodul 50 nicht nur Helligkeit erzeugt, sondern ein strukturiertes Beleuchtungsmuster.

Analog zu der Vorverarbeitungseinheit 22 ist eine Beleuchtungssteuerung 58 mit Beleuchtungstreiber und weiteren möglichen Funktionen wie Speicherung von Moduleigenschaften, Modulation der Lichtquelle 52 und dergleichen vorgesehen. Das Beleuchtungsmodul 50 kommuniziert über Schnittstellen 60 mit anderen Modulen oder übergeordneter Elektronik und ist von einem Gehäuse 62 umgeben. Die dreidimensionale Ansicht der Figur 2b zeigt eine Ausführungsform, in dem ein Beleuchtungsmodul 50 zwei Lichtquellen 52 und Sendeoptiken 54 aufweist, wobei diese Anzahl rein beispielhaft zu verstehen ist, aber andeuten soll, dass häufig mehrere Lichtquellen 52 je Kameramodul 10 benötigt werden.

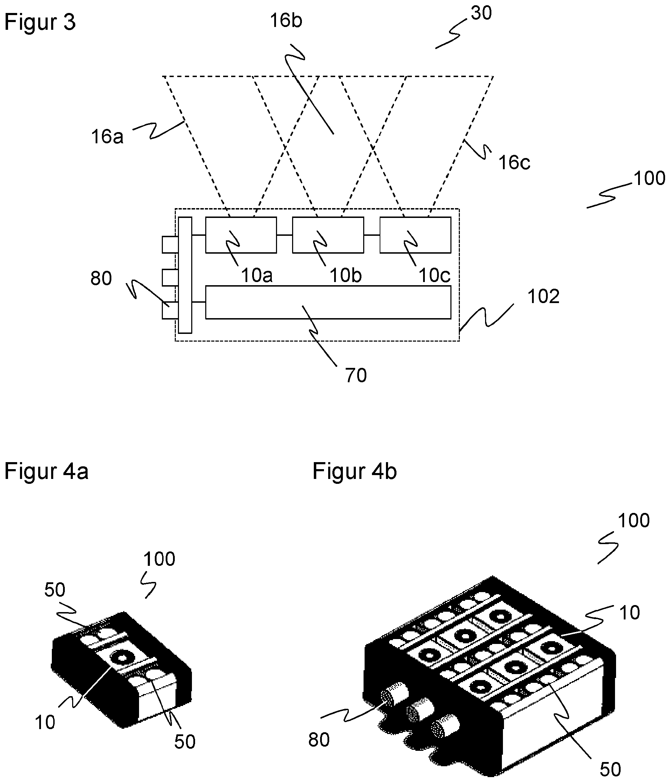

Figur 3 zeigt eine Schnittansicht einer Kamera 100 mit drei Kameramodulen 10a-c. Die innere Struktur der Kameramodule 10a-c wurde zu Figur 1 vorgestellt und ist hier vereinfachend nicht mehr dargestellt. Das modulare Multi-Kamerakonzept erlaubt natürlich auch eine andere Anzahl von Kameramodulen 10a-c und eine andere als deren lineare Anordnung.

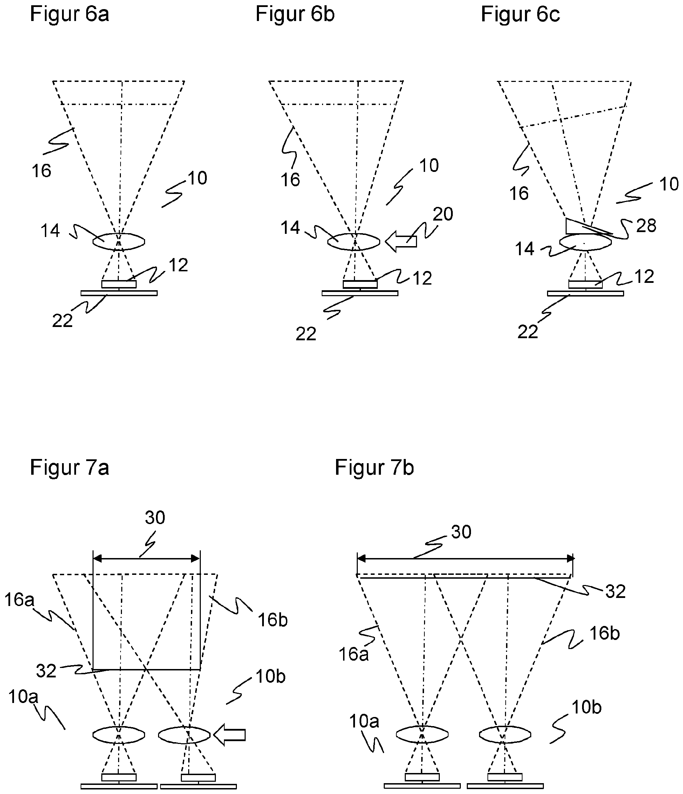

Die jeweiligen Modulsichtbereiche 16a-c ergänzen einander zu einem Überwachungsbereich 30 der Kamera 100. Die Anpassung von Modulsichtbereichen 16a-c zu verschiedenen Überwachungsbereichen 30 wird später unter Bezugnahme auf die Figuren 6 bis 9 näher erläutert.

Zum Frontend der Kamera 100 kann bevorzugt mindestens ein hier nicht gezeigtes Beleuchtungsmodul 50 gehören. Ergänzt werden die Kameramodule 10a-c mit einem auch als gemeinsame Steuer- und Auswertungseinheit bezeichneten Prozessormodul 70 und einem Schnittstellenmodul 80. Das Schnittstellenmodul 80 verbindet die Kameramodule 10a-c und gegebenenfalls weitere Module wie Beleuchtungsmodule 50 mit dem Prozessormodul 70 und weist überdies Schnittstellen der Kamera 100 nach außen auf. Das Prozessormodul 70 kommuniziert und kooperiert mit den Vorverarbeitungseinheiten 22 der Kameramodule 10a-c.

Ein Gehäuse 102 der Kamera 100 wird vorzugsweise in einem ebenfalls modularen Gehäusekonzept als Strangpressprofil hergestellt, um die unterschiedlichen Gerätevarianten abzubilden. Ein geeigneter Werkstoff ist Aluminium.

Die mehreren Kameramodule 10a-c und der aus deren Modulsichtbereichen 16a-c zusammengesetzte Überwachungsbereich 30 können verschiedenste Anwendungsanforderungen bedienen. Einige Anwendungsbeispiele für die skalierbare Multi-Kamera 100 sind in der Einleitung kurz genannt, insbesondere Inspektion und Vermessung im industriellen Umfeld sowie das Lesen von Codes.

Werden Modulsichtbereiche 16a-c nebeneinander angeordnet oder aneinandergereiht, so vergrößert sich das Gesamtsichtfeld und damit der Überwachungsbereich 30. Dabei verbleiben vorzugsweise keine oder nur geringe Überlappungen. Es ist denkbar, die Einzelbilder der Kameramodule 10a-c zu einem Gesamtbild zusammenzufügen (Image Stitching). Für manche Anwendungen wie Codelesen ist das aber nicht zwingend erforderlich. Vielmehr können die Daten dann auch nach einer ersten Decoder-Segmentierungsstufe oder aus mehreren (Teil)-Decodierungen zusammengefasst werden.

Da die Fokuslagen der Kameramodule 10a-c einzeln einstellbar sind, ist ein Zonenfokus möglich. Dabei gibt es nicht die herkömmliche eine einzige Fokuslage der gesamten Kamera 100, sondern Kameramodule 10a-c fokussieren zonenweise entsprechend einzelnen Modulsichtbereichen 16a-c auf unterschiedliche Abstände. Damit können Szenenelemente auch in stark unterschiedlichen Abständen außerhalb des Tiefenschärfenbereichs eines einzelnen Kameramoduls 10a-c scharf aufgenommen werden. Ein Beispiel ist die Erfassung von Objekten oder Paketen, die nebeneinander auf einem Förderband unter der Kamera 10 hindurchlaufen und die sehr unterschiedliche Höhen aufweisen können.

Eine Redundanz in Überlappungsbereichen der Modulsichtbereiche 16a-c lässt sich auf vielfältige Weise nutzen, beispielsweise zur Auflösungserhöhung, für einen vergrößerten Tiefenschärfenbereich durch komplementäre Fokuslagen oder zur Erhöhung der Bildaufnahmefrequenz.

Beobachten mindestens zwei Kameramodule 10a-c denselben Bereich aus ihren unterschiedlichen Perspektiven, so ist auch eine 3D-Bildgebung nach dem Prinzip der Stereoskopie möglich. Vorzugsweise wird dann ein Beleuchtungsmodul 50 eingesetzt, das ein Mustererzeugungselement etwa in Form eines diffraktiven optischen Elements oder Mikrolinsenfeldes aufweist und den gemeinsam beobachteten Bereich mit einem strukturierten Muster beleuchtet, um genug Bildmerkmale für die Stereokorrelation und damit die Erfassung eines möglichst lückenlosen Tiefenbilds zu gewährleisten.

Die Figuren 4a-c zeigen einige Beispiele von Gerätevarianten der Kamera 100 mit unterschiedlichen Modulkonfigurationen in einer dreidimensionalen Ansicht. Dabei sind vorzugsweise jeweils untereinander gleichartige Kameramodule 10 und Beleuchtungsmodule 50 eingesetzt, so dass auf Modulebene keine Varianten erforderlich sind.

In einer kleinsten Ausführungsform gemäß Figur 4a ist ein Kameramodul 10 mit zwei Beleuchtungsmodulen 50 kombiniert. Um hier Platz zu sparen, kann das Prozessormodul 70 in einer seitlichen Endkappe des Gehäuses 102 statt unter den Modulen 10, 50 untergebracht werden. In der anderen seitlichen Endkappe befindet sich das Schnittstellenmodul 80. Das Gehäuse 102, vorzugsweise als Strangpressprofil gefertigt, kann in seiner Länge variiert werden, um weite Kameramodule 10 und Beleuchtungsmodule 50 unterzubringen.

Figur 4b zeigte eine Ausführungsform der Kamera 100 mit sechs Kameramodulen 10 und neun Beleuchtungsmodulen 15. Dabei können wie in Figur 3 gezeigt die Module 10, 50 in eine erste Ebene und das Prozessormodul 70 in eine zweite Ebene des Strangpressprofils des Gehäuses 102 eingeschoben werden.

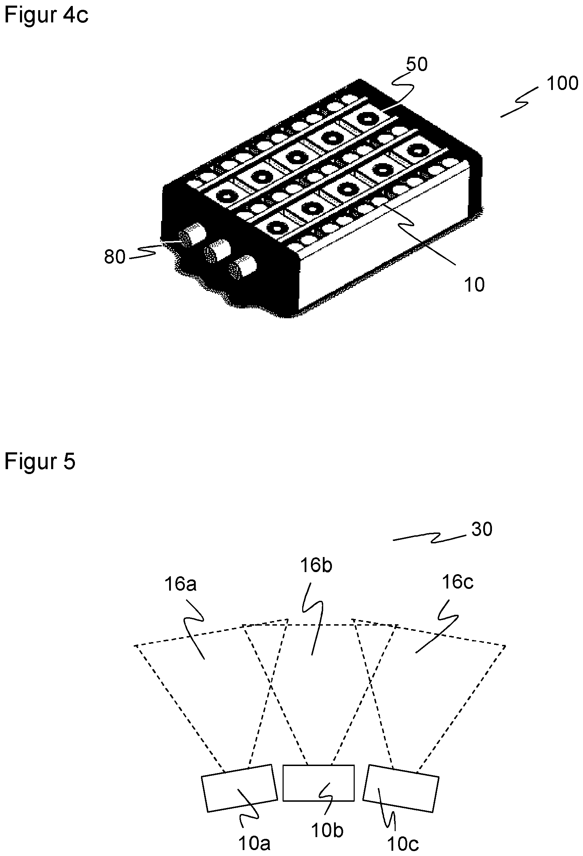

Figur 4c zeigt eine Ausführungsform der Kamera 100 mit zehn Kameramodulen 10 und fünfzehn Beleuchtungsmodulen 50. Das entspricht einer Verlängerung der Ausführungsform gemäß Figur 4b.

Die Kameramodule 10 sind jeweils in einer Reihe nacheinander angeordnet. In den Figuren 4b und 4c gibt es jeweils zwei solcher Reihen oder Stränge nebeneinander, wobei für einen noch breiteren Überwachungsbereich 30 auch mehr Reihen möglich wären. Auch die Beleuchtungsmodule 50 bilden solche Reihen. Die Kombination von Kameramodulen 10 und Beleuchtungsmodulen 50 in demselben Strang ist vorstellbar, jedoch technisch herausfordernder. Ohnehin können Verschaltung und Anordnung von den regelmäßigen Reihen der Figuren 4a-c abweichen.

Die Signale werden jeweils von dem in der Reihe vorgeordneten Modul 10, 50 zur Verfügung gestellt und an das nachgeordnete Modul 10, 50 weitergegeben oder durchgeschleust. Über das Schnittstellenmodul 80 gelangen die Signale zum Prozessormodul 70. Eine zusätzliche Schnittstellenkarte auf der entgegengesetzten Seite in der zweiten Endkappe ist nicht nur für die kleinste Kamera 100 der Figur 4a möglich.

Das Prozessormodul 70 kann für die jeweilige Kamera 100 in unterschiedlichen Leistungsklassen oder Größen ausgeführt sein. Es ist aber auch denkbar, den modularen Gedanken fortzusetzen und das jeweilige Prozessormodul 70 aus zusammengefügten Submodulen aufzubauen. Das Schnittstellenmodul 80 und das Prozessormodul 70 beziehungsweise Submodule davon können in beliebigen Mischformen unter den Modulen 10, 50 oder in den seitlichen Endkappen des Gehäuses 102 untergebracht werden.

Die gegenseitige Lage der Modulsichtbereiche 16a-c soll in der Kamera 100 im Allgemeinen nicht direkt von den Dimensionen und Abständen der Kameramodule 10a-c innerhalb der Kamera 100 bestimmt sein. Die Modulsichtbereiche 16a-c variieren, wenn die Blickrichtung der Kameramodule 10a-c verkippt wird. Eine Möglichkeit, dies zu erreichen, ist die Verkippung der ganzen Kameramodule 10a-c beziehungsweise die Unterbringung der Kameramodule 10a-c oder zumindest der Bildsensoren 12 auf einer Sphäre.

Das ist in Figur 5 illustriert, wo die seitlichen Kameramodule 10a,c durch eine gekrümmte Auflagefläche nach außen verkippt sind und sich dadurch insgesamt ein größerer Überwachungsbereich 30 ergibt. Eine solche Anordnung ist aber technisch aufwändig, unflexibel und nicht mehr vollständig modular.

Die Figuren 6a-c illustrieren, wie ein effektives Schrägstellen der Kameramodule 10 auch ohne physisches Schrägstellen möglich ist. Das hat den großen Vorteil, dass die Auflagefläche eben bleiben kann. Die Kameramodule 10 bleiben demnach physisch parallel zueinander ausgerichtet, die Bildsensoren 12 liegen in einer flachen Ebene. Damit kann die Kamera 100 viel kostengünstiger und einfacher hergestellt werden.

Figur 6a zeigt zunächst eine senkrechte Anordnung ohne Verkippung als Referenz. In Figur 6b wird eine Verkippung nach links erzielt, indem die Empfangsoptik 14 nach links verschoben und damit der zugehörige Modulsichtbereich 16 nach links verkippt wird. Stattdessen könnte auch der Bildsensor 12 nach rechts verschoben werden. In Figur 6c wird die Verkippung mit einer zusätzlichen optischen Komponente 28 erreicht, beispielsweise einem optischen Keil oder Prisma.

Vorzugsweise ist die Verkippung variabel, in dem die Kippeinheit 20 mit einer entsprechenden Aktorik ausgestattet ist. Ein Ausführungsbeispiel hierfür ist eine Tauchspuleneinheit (3D Voice Coil Aktuator), welche eine Kombination aus Linsenverkippung und lateralem Objektivversatz in bis zu fünf Freiheitsgraden erlaubt. Eine andere Möglichkeit bieten adaptive Linsen, insbesondere Flüssiglinsen, die durch zusätzliche Elektroden nicht nur in ihrer Brennweite verstellbar, sondern zudem auch kippbar sind. Die laterale Bewegung von Bildsensor 12 und/oder Empfangsoptik 14 zum effektiven Verkippen eines Kameramoduls 10 soll aber durch derartige bevorzugte Umsetzungen nicht ausgeschlossen werden.

Einige Formen des Verkippens eines Kameramoduls 10 führen zu einer nicht mehr parallel angeordneten Schärfeebene. Das ist beispielsweise in Figur 6c, aber auch bei den Kameramodulen 10a,c in Figur 5 der Fall. Die Schrägstellung schränkt die gesamte Kameraschärfentiefe ein. Als Korrektur kann der Bildsensor 12 schräg gestellt werden, vorzugsweise in Scheimpfluganordnung. Die Tiefenschärfe kann gerade bei starken Kippwinkeln ein Problem darstellen.

Das effektive Verkippen von Kameramodulen 10 und damit Verschieben von Modulsichtbereichen 16 wird verwendet, um den Uberwachungsbereich 30 anzupassen. Die Kameramodule 10 beziehungsweise deren Modulsichtbereiche 16 werden mit Hilfe der Kippeinheit 20 und gegebenenfalls der Fokusverstelleinheit 18 so ausgerichtet, dass abhängig von der Fokuslage und der aufzunehmenden Objektkontur ein für die Anwendung passender Überwachungsbereich 30 entsteht.

Dieses Konzept illustrieren die Figuren 7a-b. Figur 7a zeigt die Situation für eine recht nahe Fokuslage 32 mit gekipptem rechtem Kameramodul 10b. Die Modulsichtbereiche 16a-b rücken dabei näher zusammen. Dadurch entstehen keine Überwachungslücken zwischen den Modulsichtbereichen 16a-b im Abstand der nahen Fokuslage 32. Bei einer fernen Fokuslage 32 wie in Figur 7b dagegen kann das durch einen Pfeil angedeutete gesamte Sichtfeld oder der nutzbare Überwachungsbereich 30 vergrößert werden, indem die Verkippung wenigstens teilweise aufgehoben oder sogar eine von dem anderen Kameramodul 10a-b weg gerichtete Verkippung eingestellt wird.

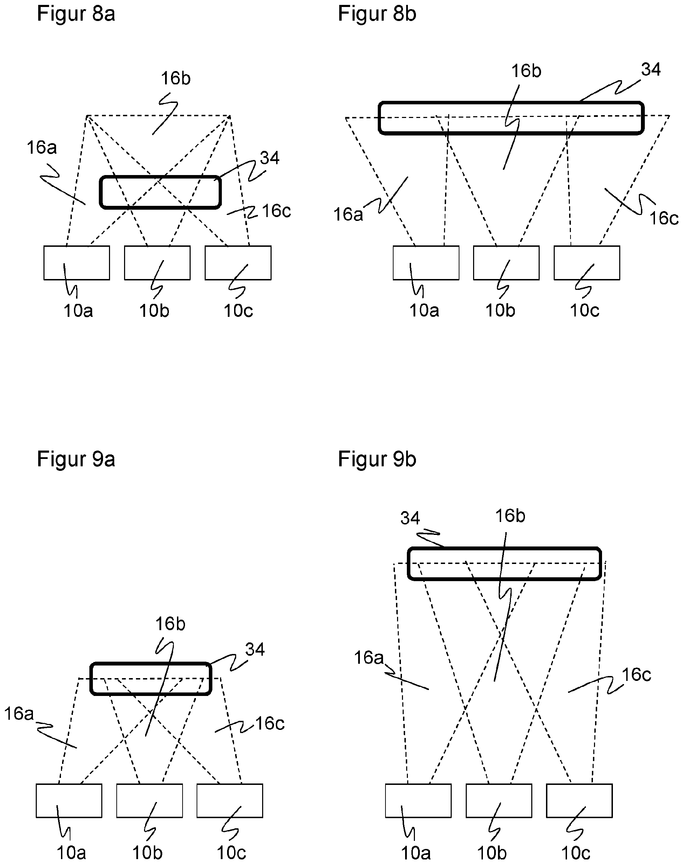

Die Figuren 8a-b konkretisieren das Konzept an einem Beispiel mit nun wieder drei Kameramodulen 10a-c. Es wird mit Hilfe der Kippeinheit 20 eine vom eingestellten Fokusabstand abhängige Verkippung in den jeweiligen Kameramodulen 10a-c vorgenommen. Im Beispiel der Figuren 8a-b ist nur die eingestellte Fokuslage bekannt, im daran anschließenden Beispiel der Figuren 9a-b der Objektabstand.

Bei den nebeneinander angeordneten Kameramodulen 10a-c gibt es für kurze Abstände einen Bereich, in dem die Modulsichtbereiche 16a-c nicht überlappen, d. h. eine Erfassungslücke. Das ist für die Aufnahme eines entsprechend nahen Objekts problematisch, weil es teilweise nicht erfasst wird.

Für eine nahe Fokuslage wie in Figur 8a werden deshalb die äußeren Kameramodule 10a,c in Abhängigkeit von der Fokuslage nach innen verkippt. Der Abstand des Objekts 34 soll ja im Fall der Figuren 8a-b nicht bekannt sein, daher stimmt die eingestellte Fokuslage und Verkippung noch nicht optimal mit der Lage des Objekts 34 überein. Es wird aber erreicht, dass sich die Modulsichtbereiche 16a-c schon für kürzere Objektabstände überlappen. Solange sich also das Objekt 34 in der Fokuslage entsprechenden Tiefenschärfenbereich befindet, wird es auch lückenlos erfasst.

Alternativ kann für eine ferne Fokuslage wie in Figur 8b die Verkippung aufgehoben werden, oder die äußeren Kameramodule 10a,c werden sogar nach außen verkippt. Dadurch wird ein größeres Sichtfeld eingestellt, es entsteht also ein größerer Überwachungsbereich 30. Die mangelnde Überlappung im Nahbereich wird bewusst in Kauf genommen, ein dort befindliches Objekt 34 würde wegen der eingestellten fernen Fokuslage ohnehin nur ganz unscharf erfasst.

Die Figuren 9a-b illustrieren den noch günstigeren Fall, in dem sogar der Objektabstand bekannt ist. Bei einer bevorzugten Ausführungsform, in welcher die Kamera über einem Förderband montiert ist, entspricht das der Objekthöhe. Vorzugsweise ist sogar noch die Objektbreite bekannt.

Dann können nämlich die Verkippungen und damit die Modulsichtbereiche 16a-c ganz gezielt auf das Objekt 34 ausgerichtet werden, um das Objekt 34 optimal und insbesondere mit maximaler Überlappung abzudecken und so mit maximaler Schärfe, Auflösung und/oder Geschwindigkeit aufzunehmen, je nachdem, was die Anwendung wünscht.

In Figur 9a ist bekannt, dass sich das Objekt 34 in relativ nahem Abstand befindet. Die Kameramodule 10a-c werden recht stark verkippt, um das Objekt 34 in seiner vollen Breite lückenlos und im Tiefenschärfenbereich zu erfassen.

In Figur 9b dagegen ist bekannt, dass sich das Objekt 34, das hier auch deutlich breiter ist, in fernem Abstand befindet. Durch eine entsprechend geringere Verkippung wird es weiterhin optimal erfasst.

In einer nicht gezeigten Weiterbildung kann auch eine komplexere Objektkontur mit lokal unterschiedlichen Abständen zur Kamera erfasst werden, oder alternativ werden mehrere Objekte unterschiedlicher Geometrie gleichzeitig aufgenommen. Dazu werden Zonen der Objektkontur oder der Objekte gebildet, die mit einer gleichen Fokuseinstellung aufgenommen werden können. Die Kameramodule 10a-b werden nun zonenweise fokussiert und deren Modulsichtbereiche 16a-c zur zugehörigen Zone ausgerichtet. Die Figuren 8 und 9 können dann als Teilansicht derjenigen Teilauswahl von Kameramodulen 10a-b verstanden werden, die für eine Zone zuständig sind.

Um die Fokuslage oder die Objektgeometrie zu erfassen, kann ein zusätzlicher Sensor verwendet werden. Eine einfache Höhe lässt sich schon mit einer Lichtschranke oder einem Lichtgitter messen, komplexere Geometrien mit einem Laserscanner oder einer 3D-Kamera. Bei Anwendungen an Förderbändern wird ein solcher Sensor herkömmlich stromaufwärts angeordnet. Die Geometrieinformationen werden an die Kamera übermittelt und über die Fließbandgeschwindigkeit zugeordnet.

Eine Erfassung dreidimensionaler Bilddaten ist auch mit der Kamera 100 möglich, sei es mit einem zweiten System stromauf oder, bei entsprechend schneller Erfassung dreidimensionaler Bilddaten und kurzer Ansprechzeit der Kippeinheit 20 im Vergleich zur Dynamik in der Szenerie, auch durch eine einzige Kamera 100, welche die dreidimensionalen Bilddaten für eine Optimierung ihrer eigenen Modulsichtbereiche 16a-c nutzt. Dreidimensionale Bilddaten müssen auch nicht zwingend für die Einstellung von Modulsichtbereichen 16a-c verwendet werden, sondern sind auch für sich je nach Anwendung die gesuchte Erfassungsgröße.

Die Kamera 100 kann dreidimensionale Bilddaten nach dem Stereoskopieprinzip aus den überlappenden Aufnahmen mindestens zweier Kameramodule erfassen. Alternativ kann ein Kameramodul 10 mit einem passenden Beleuchtungsmodul 50 zu einem Lichtlaufzeitmodul weitergebildet werden. Das Beleuchtungsmodul 50 erzeugt dann ein moduliertes Lichtsignal, und aus der Modulation bestimmt das Lichtlaufzeitmodul mit einem Phasen- oder Pulsverfahren die Lichtlaufzeit und damit einen Abstandswert.

In den bisherigen Ausführungsformen wurden Kameramodule 10, Beleuchtungsmodule 50 speziell auch mit strukturierter oder modulierter Beleuchtung vorgestellt. Es sind weitere Module denkbar, beispielsweise ein Ziellasermodul, das den Überwachungsbereich 30, Modulsichtbereiche 16 oder ein Lesefeld innerhalb des Überwachungsbereichs als Laserpunkt, Kreuz oder sonstiges Muster anzeigt, oder ein visuelles Feedbackmodul, das die eingestellte Fokuslage oder ein Erfassungsergebnis sichtbar macht, etwa durch rotes beziehungsweise grünes Licht nach einem nicht oder einem erfolgreich gelesenen Code (NoRead/GoodRead).

## Patentansprüche

1. Modulare Kameravorrichtung (100) mit einer gemeinsamen Steuer- und Auswertungseinheit (70) und mit mehreren Kameramodulen (10a-c), die jeweils eine Empfangsoptik (14) und einen Bildsensor (12) aufweisen, die einen Modulsichtbereich (16a-c) des Kameramoduls (10a-c) bestimmen, wobei die Modulsichtbereiche (16a-c) gemeinsam einen Überwachungsbereich (30) der Kameravorrichtung (100) ergeben und der Überwachungsbereich (30) durch gemeinsames Einstellen der Modulsichtbereiche (16a-c) anpassbar ist,
**dadurch gekennzeichnet,**
**dass** mindestens ein Kameramodul (10a-c) eine Kippeinheit (20) zum Verändern der Blickrichtung aufweist und dass die Steuer- und Auswertungseinheit (70) dafür ausgebildet ist, die Modulsichtbereiche (16a-c) in Abhängigkeit von einer Fokuslage einzustellen, mit einer stärkeren Verkippung aufeinander zu bei einer näheren Fokuslage und einer geringeren Verkippung aufeinander zu oder voneinander weg bei einer fernen Fokuslage.

2. Kameravorrichtung (100) nach Anspruch 1,
wobei die Kippeinheit (20) eine Flüssiglinse oder eine Tauchspuleinheit aufweist.

3. Kameravorrichtung (100) nach einem der vorhergehenden Ansprüche,
wobei die Bildsensoren (12) der Kameramodule (10a-c) in einer gemeinsamen Ebene angeordnet sind.

4. Kameravorrichtung (100) nach einem der vorhergehenden Ansprüche,
wobei mindestens ein Kameramodul (10a-c) eine Fokusverstelleinheit (18) aufweist.

5. Kameravorrichtung (100) nach einem der vorhergehenden Ansprüche,
wobei die Steuer- und Auswertungseinheit (70) dafür ausgebildet ist, die Überlappung der Modulsichtbereiche (16a-c) in Abhängigkeit von der Fokuslage einzustellen.

6. Kameravorrichtung (100) nach einem der vorhergehenden Ansprüche,
wobei die Steuer- und Auswertungseinheit (70) dafür ausgebildet ist, die Modulsichtbereiche (16a-c) in Abhängigkeit von der Geometrie eines zu erfassenden Objekts (34) so auszurichten, dass die Objektgeometrie möglichst vollständig und genau erfasst wird.

7. Kameravorrichtung (100) nach einem der vorhergehenden Ansprüche,
wobei die Steuer- und Auswertungseinheit (70) dafür ausgebildet ist, mit Hilfe der Kameramodule (10a-c) dreidimensionale Bilddaten zu erfassen und die dreidimensionalen Bilddaten für die Einstellung der Modulsichtbereiche (16a-c) zu verwenden.

8. Kameravorrichtung (100) nach einem der vorhergehenden Ansprüche,
wobei die Kameramodule (10a-c) mindestens eine lineare Anordnung bilden, die in Reihenschaltung mit der Steuer- und Auswertungseinheit (70) verbunden ist.

9. Kameravorrichtung (100) nach einem der vorhergehenden Ansprüche,
die mindestens ein Beleuchtungsmodul (50) und/oder mindestens ein Projektionsmodul aufweist.

10. Verfahren zur optischen Erfassung eines Überwachungsbereichs (30), der aus den Modulsichtbereichen (16a-c) mehrerer Kameramodule (10a-c) zusammengesetzt ist, die jeweils durch eine Empfangsoptik (14) und einen Bildsensor (12) der Kameramodule bestimmt sind, wobei der Überwachungsbereich (30) durch gemeinsames Einstellen der Modulsichtbereiche (16a-c) angepasst wird,
**dadurch gekennzeichnet,**
**dass** die Modulsichtbereiche (16a-c) in Abhängigkeit von einer Fokuslage einstellt werden, mit einer stärkeren Verkippung aufeinander zu bei einer näheren Fokuslage und einer geringeren Verkippung aufeinander zu oder voneinander weg bei einer fernen Fokuslage.

## Claims

1. A modular camera device (100) having a common control and evaluation unit (70) and having a plurality of camera modules (10a-c) each comprising a receiving optics (14) and an image sensor (12) that determine a module viewing area (16a-c) of the camera module (10a-c), the module viewing areas (16a-c) together forming a monitoring area (30) of the camera device (100), and the monitoring area (30) being adaptable by common adjustment of the module viewing areas (16a-c), **characterized in that** at least one camera module (10a-c) comprises a tilting unit (20) for changing the viewing direction, and **in that** the control and evaluation unit (70) is configured to adjust the module viewing areas (16a-c) as a function of a focus position, with a greater tilting towards one another at a closer focus position and a lesser tilting towards or away from one another at a distant focus position.

2. The camera device (100) according to claim 1,
wherein the tilt unit (20) comprises a liquid lens or a moving coil unit.

3. The camera device (100) according to any of the preceding claims,
wherein the image sensors (12) of the camera modules (10a-c) are arranged in a common plane.

4. The camera device (100) according to any of the preceding claims,
wherein at least one camera module (10a-c) comprises a focus adjustment unit (18).

5. The camera device (100) according to any of the preceding claims,
wherein the control and evaluation unit (70) is configured to adjust the overlap of the module viewing areas (16a-c) depending on the focus position.

6. The camera device (100) according to any of the preceding claims,
wherein the control and evaluation unit (70) is configured to align the module viewing areas (16a-c) as a function of the geometry of an object (34) to be detected in such a way that the object geometry is detected as completely and accurately as possible.

7. The camera device (100) according to any of the preceding claims,
wherein the control and evaluation unit (70) is configured to acquire three-dimensional image data by means of the camera modules (10a-c) and to use the three-dimensional image data for setting the module viewing areas (16a-c).

8. The camera device (100) according to any of the preceding claims,
wherein the camera modules (10a-c) form at least one linear arrangement connected in series with the control and evaluation unit (70).

9. The camera device (100) according to any of the preceding claims,
comprising at least one illumination module (50) and/or at least one projection module.

10. A method for optically detecting a monitoring area (30) composed of the module viewing areas (16a-c) of a plurality of camera modules (10a-c), each of which is determined by a receiving optics (14) and an image sensor (12) of the camera modules, wherein the monitoring area (30) is adapted by common adjustment of the module viewing areas (16a-c),
**characterized in that** the module viewing areas (16a-c) are adjusted in dependence on a focus position, with a greater tilt towards each other at a closer focus position and a lesser tilt towards or away from each other at a far focus position.

## Revendications

1. Dispositif de caméra modulaire (100) comportant une unité de commande et d'évaluation commune (70) et plusieurs modules de caméra (10a-c) présentant chacun une optique de réception (14) et un capteur d'images (12) qui déterminent une zone d'observation de module (16a-c) du module de caméra (10a-c), les zones d'observation de module (16a-c) formant communément une zone de surveillance (30) du dispositif de caméra (100), et la zone de surveillance (30) pouvant être adaptée par un réglage commun des zones d'observation de module (16a-c),
**caractérisé en ce que**
au moins un module de caméra (10a-c) présente une unité d'inclinaison (20) pour modifier la direction d'observation, et **en ce que** l'unité de commande et d'évaluation (70) est réalisée pour régler les zones d'observation de module (16a-c) en fonction d'une position de mise au point, avec une inclinaison plus importante les unes vers les autres dans le cas d'une position de mise au point rapprochée et avec une inclinaison plus faible les unes vers les autres ou un éloignement les unes des autres dans le cas d'une position de mise au point lointaine.

2. Dispositif de caméra (100) de la revendication 1,
dans lequel l'unité d'inclinaison (20) comprend une lentille liquide ou une unité de bobine mobile.

3. Dispositif de caméra (100) selon l'une des revendications précédentes,
dans lequel les capteurs d'images (12) des modules de caméra (10a-c) sont disposés dans un plan commun.

4. Dispositif de caméra (100) selon l'une des revendications précédentes, dans lequel au moins un module de caméra (10a-c) comprend une unité de réglage de mise au point (18).

5. Dispositif de caméra (100) selon l'une des revendications précédentes,
dans lequel l'unité de commande et d'évaluation (70) est réalisée pour ajuster le chevauchement des zones d'observation de module (16a-c) en fonction de la position de mise au point.

6. Dispositif de caméra (100) selon l'une des revendications précédentes,
dans lequel l'unité de commande et d'évaluation (70) est réalisée pour orienter les zones d'observation de module (16a-c) en fonction de la géométrie d'un objet (34) à détecter, de telle sorte que la géométrie de l'objet soit détectée de manière aussi complète et précise que possible.

7. Dispositif de caméra (100) selon l'une des revendications précédentes,
dans lequel l'unité de commande et d'évaluation (70) est réalisée pour acquérir des données d'image tridimensionnelles à l'aide des modules de caméra (10a-c) et pour utiliser les données d'image tridimensionnelles pour régler les zones d'observation de module (16a-c).

8. Dispositif de caméra (100) selon l'une des revendications précédentes,
dans lequel les modules de caméra (10a-c) forment au moins un arrangement linéaire connecté en série avec l'unité de commande et d'évaluation (70).

9. Dispositif de caméra (100) selon l'une des revendications précédentes, comprenant au moins un module d'éclairage (50) et/ou au moins un module de projection.

10. Procédé de détection optique d'une zone de surveillance (30) qui se compose des zones d'observation de module (16a-c) de plusieurs modules de caméra (10a-c) qui sont déterminées chacune par une optique de réception (14) et un capteur d'images (12) des modules de caméra, la zone de surveillance (30) étant adaptée par un réglage commun des zones d'observation de module (16a-c),
**caractérisé en ce que**
les zones d'observation de module (16a-c) sont réglées en fonction d'une position de mise au point, avec une inclinaison plus importante les unes vers les autres dans le cas d'une position de mise au point rapprochée et avec une inclinaison plus faible les unes vers les autres ou en éloignement les unes des autres dans le cas d'une position de mise au point lointaine.
